# EUROPÄISCHE PATENTANMELDUNG

(11) **EP 2 450 317 A1**
(43) Veröffentlichungstag der Anmeldung: **09.05.2012**
(21) Anmeldenummer: 11008641.0
(22) Anmeldetag: 28.10.2011
(51) Int. Cl.: C03B 9/16, F16H 25/20, C03B 9/36

(54) **Baueinheit zum Überführen einer Komponente zwischen zwei Stellungen**

(30) Priorität: 04.11.2010 DE 102010050204
(71) Anmelder: Heye International GmbH, 31683 Obernkirchen (DE)
(72) Erfinder: Felgenhauer, Benedikt. Dr, D-32049 Herford (DE)
(74) Vertreter: Sobisch, Peter

(57) **Zusammenfassung**

Zur Darstellung einer Überführungskurve für den Blaskopf einer I.S.-Glasformmaschine wird eine Baueinheit vorgeschlagen, welche mittels eines Antriebs ausgehend von einer ersten Stellung eine Schwenkbewegung um eine horizontale Achse nach Maßgabe eines definierten Winkels sowie eine sich anschließende vertikale Linearbewegung bis zu einer zweiten Stellung generiert, in der sich der Blaskopf in seiner aktiven, auf dem Mündungsbereich einer Form dichtend aufliegenden Position befindet. Der Antrieb steht mit einer sich vertikal erstreckenden Gewindespindel (12) im Eingriff, deren Drehbewegung in eine vertikale Bewegung eines den Kreuzkopf (16) eines Kurbelgetriebes tragenden Wagens (7) umgesetzt wird, wobei der Kreuzkopf (16) über ein Pleuel (22) mit einem Kurbelarm (20) in Verbindung steht, mit dessen als Hohlwelle (25) ausgebildeten, auf einem, in Aufwärtsrichtung unter Federvorspannung stehenden Wagen (8) gelagerten Kurbelzapfen über einen Blaskopfarm (24) der Blaskopf in Verbindung steht. Die Bewegung des Wagens (7) unter Schwenkung des Blaskopfes in Richtung auf den Wagen (8) hin ist winkelbegrenzt bis eine horizontale Position des Blaskopfarmes (24) erreicht ist, wobei eine weitere gleich gerichtete Drehung der Gewindespindel (12) eine Bewegung beider Wagen (7, 8) entgegen der Federvorspannung des Wagens (8) in Richtung auf die zweite Stellung hin unter Beibehaltung der horizontalen Position des Blaskopfarmes generiert, in der sich die Achsen (33) von Blaskopfdüsen (31) senkrecht erstrecken. Die Baueinheit weist einen konstruktiv einfachen, robusten Aufbau auf und ist insbesondere für den Betrieb einer Glashütte geeignet.

## Beschreibung

Die Erfindung bezieht sich auf eine Baueinheit entsprechend dem Oberbegriff des Anspruchs 1.

Der Herstellungsprozess von Hohlglasartikeln auf einer I.S.-Glasformmaschine (Individual Section) ausgehend von der Einführung eines schmelzflüssigen Glastropfens in eine Vorform bis hin zur Erstellung eines abschließend geformten Artikels ist durch zahlreiche Transportvorgänge und Zustellbewegungen charakterisiert, an deren technische Darstellung und Präzision mit zunehmendem Durchsatz dementsprechend steigende vielfältige Anforderungen gestellt werden. Dabei ist zu berücksichtigen, dass die in diesem Zusammenhang eingesetzten Baueinheiten für die durch Hitze sowie abrasiv wirksame Stäube gekennzeichnete aggressive Atmosphäre einer Glashütte geeignet sein müssen.

Häufig ist die Überführungsbewegung entlang einer Überführungskurve zwischen zwei Stellungen als Überlagerung einer Translations- und einer Rotationsbewegung angelegt, wie z. B. bei der Überführung von abschließend geformten, auf einer Absetzplatte aufstehenden Hohlglasartikeln auf ein Förderband, auf diesem Reihen quer zu dessen Förderrichtung bildend, wobei die Hohlglasartikel anschließend einem Kühlofen zugeführt werden.

Eine allgemein zur Darstellung einer Bewegungsform, welche aus der Überlagerung einer Translations- und einer Rotationsbewegung zusammengesetzt ist, bestimmte Baugruppe ist aus dem Dokument EP 0 283 548 A1 bekannt. Hierbei ist ein Schlitten auf zwei sich mit Abstand parallel zueinander erstreckenden Kolben-Zylinder-Einheiten aufgelagert und entlang dieser verschiebbar. Auf dem Schlitten, und zwar zwischen den Kolben-Zylinder-Einheiten ist ein um eine sich senkrecht zu deren Achsen erstreckende Achse drehbar gelagertes Antriebselement gelagert, welches über Verzahnungen beidseitig mit den Kolben-Zylinder-Einheiten im Eingriff steht. Nach Maßgabe der Ansteuerung der beiden Kolben-Zylinder-Einheiten sind bezogen auf das Antriebselement wahlweise eine Translationsbewegung, eine Rotationsbewegung oder auch eine Kombination dieser beiden Bewegungen darstellbar.

Zur Anwendung jeweils im Werkzeugmaschinenbau sind aus den Dokumenten JP 62-193705 A und DE 1 922 492 A1 Baugruppen bekannt, bei denen mittels eines Antriebes eine Rotations- und eine Translationsbewegung darstellbar ist. Die konstruktive Ausgestaltung dieser Baugruppen ist im Einzelfall an den jeweiligen Einsatzzweck, hier der Betätigung einer zum Klemmen eines Werkstücks bestimmten Einrichtung, dort der Betätigung eines Werkzeugmagazins angepasst.

Eine zur Darstellung der Überführungsbewegung zwischen der Absetzplatte einer I.S. Glasformmaschine und einem zu einem Kühlofen führenden Förderband bestimmte Baueinheit ist beispielsweise aus dem Dokument US 7,264,108 B2 bekannt und besteht aus einem mittels eines ersten Antriebs um eine vertikale Achse schwenkbaren Träger, auf dem eine Schubstange linear mittels eines auf dem Träger angeordneten zweiten Antriebs bewegbar angeordnet ist, wobei sich am freien Ende der Schubstange eine Anordnung von zur unmittelbaren Erfassung der Hohlglasartikel bestimmter, mittels eines dritten Antriebs gegenüber der Schubstange um eine Achse schwenkbarer Schubfinger befindet. Sämtliche Rotations- und Translationsbewegungen dieser bekannten Baueinheit sind in einer Horizontalebene eingerichtet. Bei Baueinheiten dieser Art kommt es besonders auf die Darstellung einer solchen Überführungskurve an, welche eine hohe Überführungsgeschwindigkeit ohne das Risiko eines Umfallens oder einer Beschädigung der Hohlglasartikel erlaubt. Insgesamt ist diese Baueinheit aufgrund der Notwendigkeit von drei Antrieben, von denen zwei bewegt angeordnet sind, durch einen vergleichsweise komplizierten Aufbau gekennzeichnet.

Lediglich beispielhaft sei auch auf eine Baueinheit zur Überführung eines Blaskopfes zwischen einer inaktiven und einer aktiven, dass heißt auf eine Form bzw. einen Formensatz aufgesetzten Blaskopf hingewiesen, somit ein bewegtes Maschinenteil, das zum Transport der Blasluft dient. Eine solche ist beispielsweise aus dem Dokument EP 0 117 628 A1 bekannt und besteht aus einem eine vertikale Hubbewegung mit einer horizontalen Rotationsbewegung zusammenfassenden Baueinheit. Beide Teilbewegungen sind unabhängig voneinander steuerbar und werden hydraulisch generiert. Der Einsatz von Hydraulik bei einer Glasformmaschine wird allgemein als unzweckmäßig angesehen. Hinzutritt auch hier ein konstruktiv relativ komplizierter Aufbau, welcher sich aus der Verwendung von zwei voneinander unabhängig steuerbaren, zur Darstellung der beiden Teilbewegungen bestimmten Kolben-Zylinder-Einheiten ergibt.

Es ist die Aufgabe der Erfindung, eine Hub- und Schwenkbewegung zwischen zwei Positionen generierende Baueinheit der eingangs vorgestellten Art mit Hinblick auf einen einfacheren, robusten, insbesondere für die Atmosphäre einer Glashütte geeigneteren Aufbau hin zu konzipieren. Gelöst ist diese Aufgabe bei einer solchen Baueinheit durch die Merkmale des Kennzeichnungsteils des Anspruchs 1.

Erfindungswesentlich für die Baueinheit ist hiernach eine aus einer winkelbegrenzten Drehbewegung um eine Achse und einer sich anschließenden vertikal zu dieser Achse orientierten Linearbewegung zusammengesetzte Überführungskurve, entlang welcher eine Komponente zwischen einer ersten und einer zweiten Stellung überführbar ist, wobei beide Teilbewegungen mittels eines einheitlichen Antriebes nacheinander einleitbar sind. Auf diese Weise ergibt sich ein vergleichsweise einfacher konstruktiver Aufbau mit einer in einer Ebene darstellbaren Überführungskurve.

Die genannte Achse erstreckt sich horizontal, wobei die Linearbewegung vertikal orientiert ist. Es ergibt sich somit eine Überführungskurve in einer Vertikalebene.

Die Erfindung ist jedoch gleichermaßen zur Darstellung einer Überführungskurve in einer Horizontalebene oder einer allgemein geneigten Ebene geeignet.

Der genannte Antrieb steht mit einer Gewindespindel in Antriebsverbindung, die sich vertikal erstreckt und deren Drehbewegung jedenfalls zur Generierung der beiden aufeinander folgenden Teilbewegungen benutzt wird. Eine horizontale Erstreckung der Gewindespindel wird jedoch nicht ausgeschlossen.

Die mittels der Baueinheit entlang der Überführungskurve zu bewegende Komponente ist an einem Ausleger angeordnet bzw. gehalten, der um eine horizontale Achse schwenkbar gelagert ist. Die Schwenkbewegung des Auslegers ist ausgehend von einer ersten Stellung, in der sich der Ausleger im wesentlichen vertikal erstreckt, in Richtung auf eine solche Stellung hin drehwinkelbegrenzt angelegt, in der sich der Ausleger horizontal erstreckt.

Die Baueinheit besteht aus einem Rahmengestell, innerhalb welchem entlang sich parallel zueinander erstreckender Führungen ein oberer Wagen unter Mitwirkung des genannten Antriebs verschiebbar angeordnet ist, wobei ein unterer Wagen vorgesehen ist, der über ein Kurbelgetriebe mit dem oberen, einen Kreuzkopf lagernden Wagen in Wirkverbindung steht. Hierbei wird die Linearbewegung des oberen Wagens und damit des Kreuzkopfes über das Kurbelgetriebe in eine Schwenkbewegung dessen Kurbelzapfens umgesetzt. Durch die Schwenkbewegung des Kurbelzapfens um dessen horizontale Achse ist die erste Teilbewegung der Überführungskurve dargestellt. Zwischen den Wagen ist ein Anschlag wirksam, der die Verschiebung des oberen Wagens in Richtung auf den unteren Wagen hin begrenzt.

Der untere Wagen ist entsprechend den Merkmalen des Anspruchs 2 in Abwärtsrichtung auf einer Feder abgestützt, wohingegen in Aufwärtsrichtung eine Wegbegrenzung eingerichtet ist. Diese kann durch eine Klemmung, einen festen Anschlag oder dergleichen gebildet sein. In jedem Fall liegt der Wagen unter der Vorspannung der Feder an der Wegbegrenzung an. Es handelt sich um eine lösbare Wegbegrenzung, deren Position entlang der Führungen festlegbar ist.

Ist eine Position erreicht, in der der obere Wagen unter Drehung des genannten Kurbelzapfens über den Anschlag in Anlage an den unteren Wagen gelangt, ist gemäß den Merkmalen des Anspruchs 3 eine weitere Drehung des Kurbelzapfens nicht mehr möglich und es bewegen sich bei weiterer gleich gerichteter Drehung der Gewindespindel nunmehr beide Wagen als Gruppe entgegen der Vorspannung der genannten Feder. Infolge des Ausfalls einer Schwenkbewegung handelt es sich bei der letztgenannten Bewegung um die zweite Teilbewegung, nämlich eine ausschließliche Linearbewegung. Wesentlich für diese Linearbewegung ist, dass eine beispielsweise horizontale Ausrichtung des Auslegers am Ende der ersten Teilbewegung unverändert beibehalten wird.

Unter Beibehaltung der beispielsweise horizontalen Ausrichtung des Auslegers ist entsprechend den Merkmalen der Ansprüche 4 und 5 eine einfache Verstellung der Höhenposition des unteren Wagens gegenüber einem Bezugsniveau unter Mitwirkung des Antriebs der Baueinheit eingerichtet. Hierbei werden beide Wagen mittels einer Schiene vorübergehend starr miteinander gekoppelt, wobei mittels des Antriebs die neue Position des unteren Wagens eingestellt wird und wobei die Kopplung der beiden Wagen anschließend wieder gelöst wird. Über die eingangs genannte Wegbegrenzung wird anschließend die neue Position des unteren Wagens festgelegt.

Die Merkmale der Ansprüche 6 bis 8 sind auf einige beispielhafte konstruktive Konkretisierungen der mittels der Baueinheit entlang der Überführungskurve zwischen der ersten und der zweiten Stellung zu bewegenden Komponente gerichtet. Es handelt sich hiernach um den Blaskopf, den Vorboden oder den Trichter einer I.S.-Glasformmaschine, so dass der Ausleger an einer um eine horizontale Achse drehbaren Hohlwelle gelagert ist, welche mit einer zu einem Anschluss führenden Rohrleitung in Verbindung steht, so dass die Stützstruktur der Komponente gleichzeitig als Blasluftleitung eingesetzt ist. Der Blaskopf oder auch der Vorboden können hierbei in üblicher Weise ausgebildet sein und mehrere Blaskopf- bzw. Vorbodendüsen aufweisen, deren Achsen sich in der eingangs genannten zweiten Stellung vertikal erstrecken. Gleiches gilt für den zur Zentrierung des Glasflusses eingesetzten Trichter.

Die zur Führung der Blasluft bestimmte Rohrleitung ist entsprechend den Merkmalen des Anspruchs 9 in zwei relativ zueinander teleskopartig verschiebbare Abschnitte unterteilt, wobei das Ausmaß der Verschiebbarkeit in Abhängigkeit von der in Richtung der Führungen gegebenen Verschiebbarkeit des oberen Wagens eingerichtet ist.

Ein dritter, zur Abstützung der zur Darstellung der Vorspannung, unter der die Position des unteren bzw. zweiten Wagens gegenüber einer Abwärtsbewegung steht, bestimmten Feder eingerichteter Wagen kann entsprechend den Merkmalen des Anspruchs 10 vorgesehen sein. Auf diese Weise, nämlich durch Verstellung der Position dieses dritten Wagens kann gegebenenfalls die Vorspannung in einfachster Weise eingestellt werden.

Man erkennt, dass mit der erfindungsgemäßen Baueinheit eine Vorrichtung zur Überführung einer Komponente, z. B. eines Blaskopfes entlang einer Überführungskurve in einer Vertikalebene zur Verfügung gestellt wird, welche sich durch einen konstruktiv einfachen robusten Aufbau auszeichnet, und insbesondere einfache Justiermöglichkeiten bietet.

Obwohl die Darstellung einer Überführungskurve in einer Vertikalebene der bevorzugte Anwendungsfall der Baueinheit ist, kann deren mechanisches Konzept gleichermaßen auch zur Darstellung von Überführungskurven in beliebig geneigten Ebenen einschließlich einer Horizontalebene benutzt werden.

Auch ist die Anwendung der Baueinheit nicht auf ein Bewegen eines Blaskopfes, eines Vorbodens oder eines Trichters einer Glasformmaschine beschränkt und kann grundsätzlich auch in anderen Funktionszusammenhängen allgemein zur

Überführung anderer Komponenten zwischen einer ersten und zweiten Stellung benutzt werden.

Die Erfindung wird im Folgenden unter Bezugnahme auf das in den Zeichnungen dargestellte Ausführungsbeispiel näher erläutert werden. Es zeigen:
Fig. 1 eine vorderseitige Ansicht einer erfindungsgemäßen, als Träger des Blaskopfes einer I. S. Maschine eingesetzten Baueinheit;
Fig. 2 eine Ansicht der Baueinheit in einer Schnittebene II - II der Fig. 1;

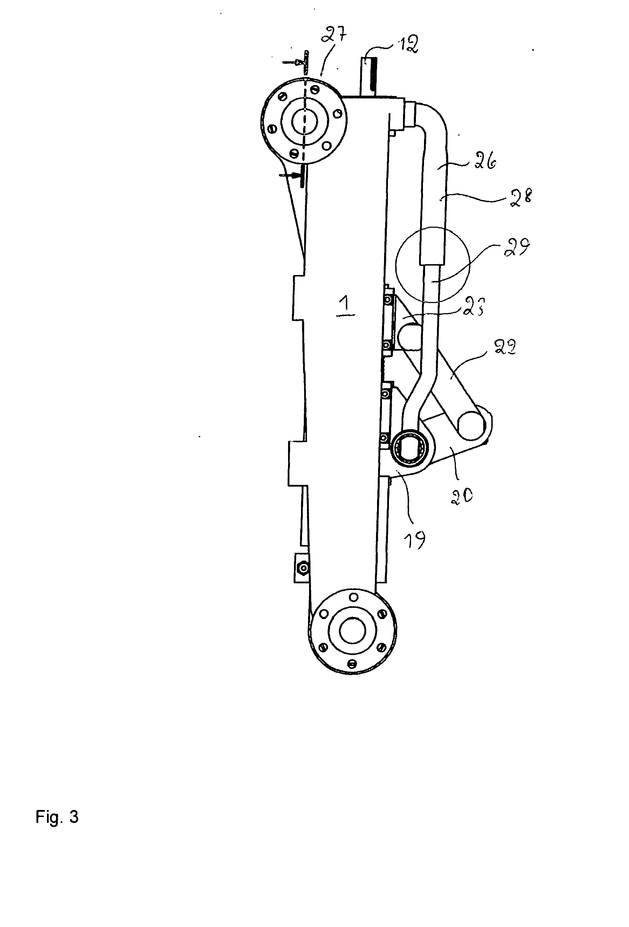

Fig. 3 eine Ansicht der Baueinheit entsprechend einer Blickrichtung III der Fig. 1;

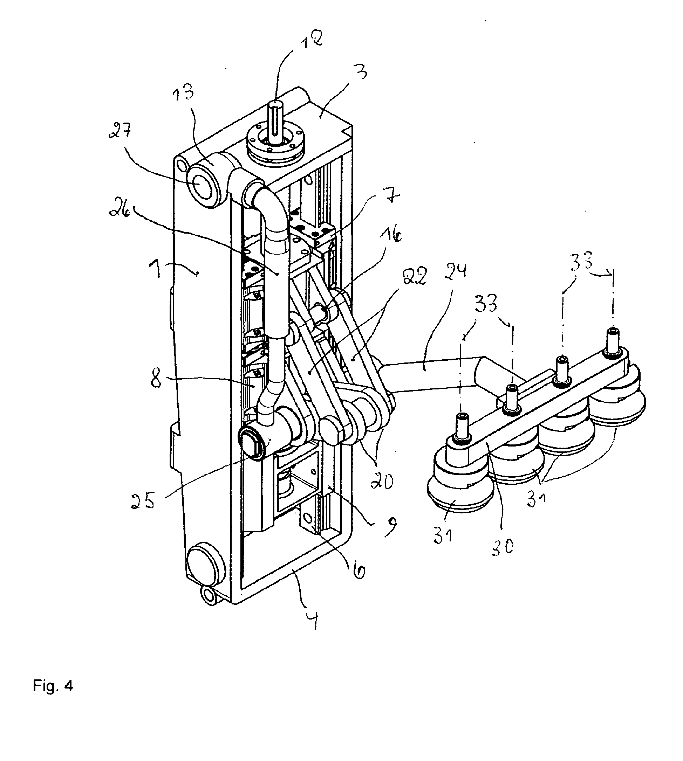

Fig. 4 eine perspektivische rechts- und oberseitige Ansicht der Baueinheit gemäß Fig. 1 entsprechend einer ausgeschwenkten Position des Blaskopfes;

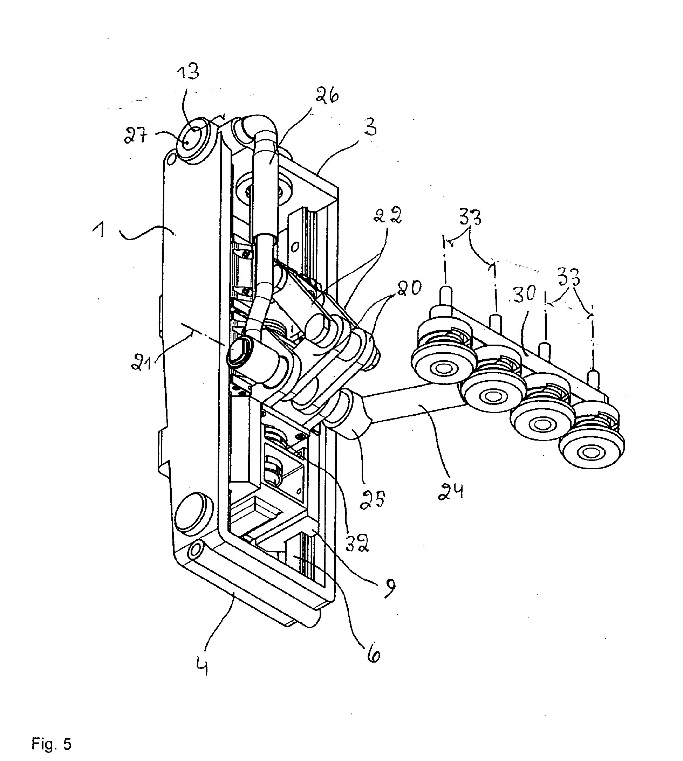

Fig. 5 eine perspektivische rechts- und unterseitige Ansicht der Baueinheit gemäß Fig. 4.

Die als Hub-Schwenkeinheit konzipierte Baueinheit ist durch ein Rahmengestell bestehend aus zwei sich vertikal und parallel zueinander erstreckenden Seitenwandungen 1, 2 gekennzeichnet, die in Verbindung mit ober- und unterseitigen Querwandungen 3, 4 einen geschlossenen Rahmen bilden. Auf den einander zugekehrten Seiten der Seitenwandungen 1, 2 befinden sich jeweils Führungen 5, 6, die als Träger eines ersten Wagens 7, eines zweiten Wagens 8 und eines dritten Wagens 9 dienen. Jeder Wagen 7, 8, 9 ist durch Führungsprofile 10, 11 gekennzeichnet, die mit den Führungen 5, 6 in formschlüssigem Eingriff stehen.

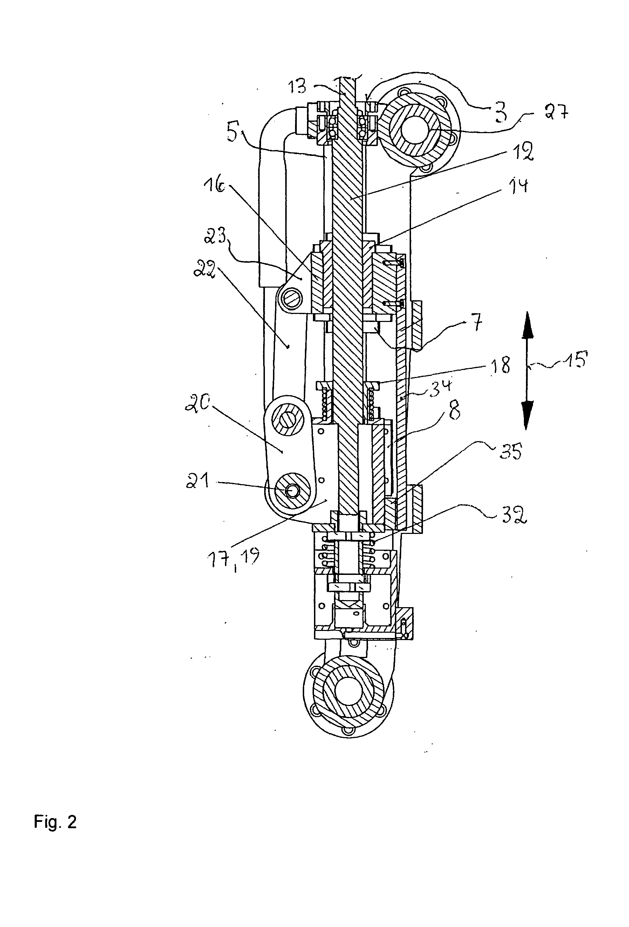

Mit 12 ist in Fig. 2 eine Gewindespindel bezeichnet, deren eines Ende 13 aus der oberen Querwandung 3 herausragt und an dieser Stelle mit einem zeichnerisch nicht dargestellten Servomotor in Antriebsverbindung steht. Die Gewindespindel 12 erstreckt sich mittig zwischen den Seitenwandungen 1, 2, parallel zu diesen und steht mit einer in dem ersten und obersten Wagen 7 gelagerten Spindelmutter 14 im Eingriff, so dass durch Drehung der Gewindespindel 12 der Wagen 7 in Richtung der Pfeile 15 entlang der beidseitigen Führungen 5, 6 linear verschiebbar ist.

Der Wagen 7 ist Träger eines Kreuzkopfes 16, dessen Funktion im Folgenden noch erläutert werden wird.

Der Wagen 8 ist Träger eines Lagerbocks 17 sowie eines Anschlags 18, der sich auf dessen dem Wagen 7 zugekehrten Oberseite befindet.

Der Lagerbock 17 ist durch zwei Lagerwangen 19 gekennzeichnet, in denen die jeweils einen Enden zweier Kurbelarme 20 um eine gemeinsame Achse 21 drehbar gelagert sind. Die jeweils anderen Enden der beiden Kurbelarme 20 stehen mit dem einen Ende eines Pleuels 22 in Verbindung, deren jeweils andere Enden in Lagerwangen 23 des Lagerbocks 16 angelenkt sind.

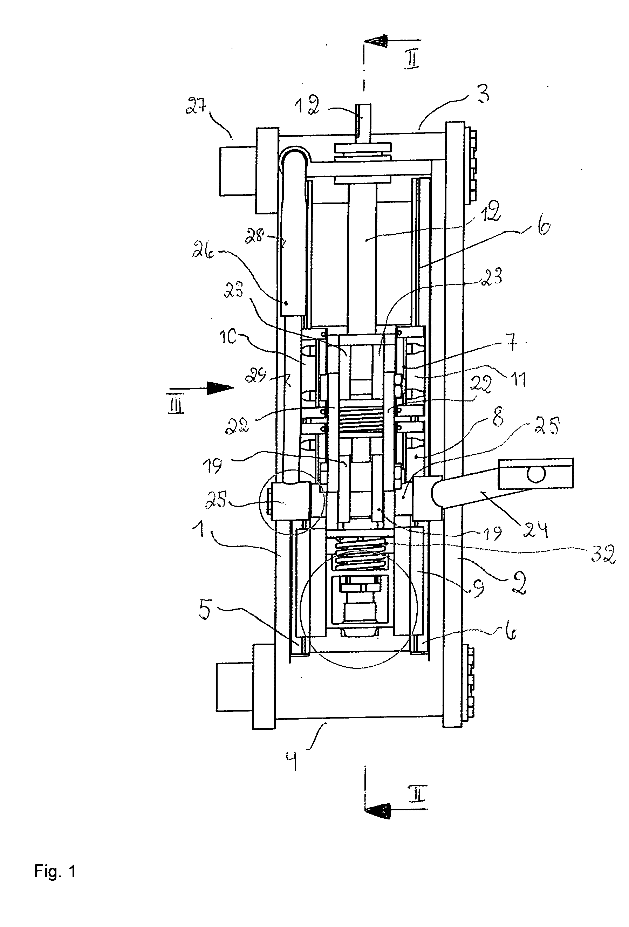

Mit 24 ist ein hohl ausgebildeter Blaskopfarm bezeichnet, dessen eines Ende mit dem in Fig. 1 rechtsseitigen Ende einer sich in Richtung der Achse 21 des Lagerbocks 17 erstreckenden Hohlwelle 25 in durchgängiger Verbindung steht, wobei die Hohlwelle 25 drehschlüssig mit den Pleueln 20 verbunden ist. Das linksseitige Ende der Hohlwelle 25 steht über eine sich vertikal erstreckende Rohrleitung 26 mit einem Anschluss 27 an der oberen Querwandung 3 in Verbindung. Die Rohrleitung 26 ist durch zwei, teleskopartig dichtend ineinander geführte Abschnitte 28, 29 gekennzeichnet.

Der abgewinkelt ausgebildete Blaskopfarm 24 steht an seinem, der Hohlwelle 25 abgekehrten Ende mit einem sich parallel zu einer durch die zugekehrte Seite der durch die Seitenwandungen 1, 2 sowie die Querwandungen 3, 4 definierbaren Ebene erstreckenden horizontalen Träger 30 in Verbindung, auf dem bis zu vier in einer Reihe angeordnete Blaskopfdüsen 31 angeordnet sind. Ausgehend von dem Anschluss 27 ist über die Rohrleitung 26, die Hohlwelle 25, den Blaskopfarm 24 sowie den Träger 30 ein Leitungssystem eingerichtet, welches dazu dient, Blasluft auf die Blaskopfdüsen 31 zu verteilen.

Der Wagen 9 ist relativ zu den seitlichen Führungen 5, 6 fest angeordnet und dient der Abstützung des einen Endes einer Feder 32 in Achsrichtung der Gewindespindel 12, wobei das andere Ende dieser Feder 32 an dem Wagen 8, insbesondere dem Lagerbock 17 abgestützt ist. Die Bewegbarkeit des Wagens 8 in einer Aufwärtsrichtung auf den Wagen 7 hin ist in zeichnerisch nicht dargestellter Weise formschlüssig begrenzt, wobei eine Bewegbarkeit in Abwärtsrichtung entgegen der unter Vorspannung stehenden Feder 32 möglich ist.

Wird ausgehend von der in Fig. 2 dargestellten Rückzugsposition des Blaskopfes, in der die Pleuel 20 um die Achse 21 im Uhrzeigersinn maximal verschwenkt sind, eine die Spindelmutter 14 abwärts bewegende Drehbewegung in die Gewindespindel 12 eingeleitet, ergibt sich bei gleichzeitiger Abwärtsbewegung des den Kreuzkopf 16 tragenden Wagens 7 über die Kurbelarme 22 sowie die Pleuel 20 eine Schwenkbewegung der Hohlwelle 25 und damit des den Blaskopf tragenden Blaskopfarmes 24 um die Achse 21. Es handelt sich in dieser die erste Teilbewegung der Überführungskurve bildenden Bewegungsphase um eine reine Schwenkbewegung und der Wagen 8 verändert seine Lage zunächst noch nicht.

Die Schwenkbewegung der Pleuel 20 endet, sobald der Wagen 7 den Anschlag 18 erreicht hat, so dass nunmehr eine weitere Relativbewegung der Wagen 7, 8 unterbunden ist. In dieser, durch ein Anliegen des Wagens 7 an dem Wagen 8 gekennzeichneten Position erstrecken sich die Achsen 33 der Blaskopfdüsen 31 senkrecht und es sind die konstruktiven Parameter des aus den Pleueln 20 sowie den Kurbelarmen 22 bestehenden Kurbeltriebs dementsprechend eingerichtet.

Bei einem weiteren Drehen der Gewindespindel 12 über die letztgenannte Position hinaus bewegen sich die aneinanderliegenden Wagen 7, 8 nunmehr als Baugruppe, dass heißt unter Beibehaltung der senkrechten Ausrichtung der Achsen 33 der Blaskopfdüsen 31, somit eine ausschließliche Hubbewegung ausführend.

Die letztgenannte, die zweite Teilbewegung bildende Bewegungsphase, welche beispielsweise wenige mm betragen kann, dient dazu, die Blaskopfdüsen 31 in ihre aktive Position zu überführen, nämlich auf die entsprechenden Mündungsöffnungen der Formen der I.S-Maschine aufzusetzen.

Bei gegebener Position der Formen ist in der Einbauposition der Baueinheit mit der Fixierung der obersten, durch die Feder 32 gesicherten Position eine Anpassung an eine bestimmte Formenhöhe gegeben. Vorraussetzung für eine genaue vertikale Ausrichtung der Achsen 33 ist während der ausschließlichen Hubbewegung eine Anpassung der Ausgangsposition des Wagens 7 an diejenige des Wagens 8, so dass über ein Anliegen an dem Anschlag 18 am Ende der Schwenkphase eine senkrechte Ausrichtung der Achsen 33 darstellbar ist.

Um eine Verstellung auf eine andere Formenhöhe vorzunehmen zu können, ist an dem Wagen 7 eine Schiene 34 befestigt, die sich in etwa parallel zu der Gewindespindel 12 erstreckt, und die in eine an dem Wagen 8 angeordnete Klemmeinrichtung 35 hineinragt.

Um die Verstellung zu bewirken, wird zunächst in der inaktiven Stellung des Blaskopfes gemäß Fig. 2 ein Eingriff der Klemmeinrichtung 35 mit der Schiene 34 hergestellt, so dass die Wagen 7, 8 nunmehr starr verbunden sind und eine einheitlich bewegbare Baugruppe bilden. Anschließend wird die Klemmung (nicht dargestellt) gelöst, welche eine Wegbegrenzung für eine Aufwärtsbewegung des Wagens 8 bildet und an der er unter der Mitwirkung der Feder 32 anliegt.

Anschließend wird diese Baugruppe durch Drehung der Gewindespindel 12 aufwärts oder abwärts zwecks Anpassung an die geänderte Formenhöhe verschoben. Ist die korrekte Stellung erreicht, wird die genannte Wegbegrenzung für den Wagen 8 nebst Lagerbock 17 aktiviert, so dass dieser unter der Vorspannung der Feder 32 an dieser anliegt. Anschließend wird die Klemmeinrichtung 35 inaktiviert, so dass der Wagen 7 zwischen der inaktiven Stellung des Blaskopfes und einer solchen Stellung am Ende der Schwenkbewegung, in der die Achsen 33 vertikal ausgerichtet sind, gegenüber dem Wagen 8 entlang der Führungen 5, 6 verschiebbar ist.

Entsprechend der geänderten Höhenposition des Wagens 8 ist die Baueinheit nunmehr auf eine andere Formenhöhe eingestellt.

### Bezugszeichenliste:

- 1.: Seitenwandung
- 2.: Seitenwandung
- 3.: Querwandung
- 4.: Querwandung
- 5.: Führung
- 6.: Führung
- 7.: Wagen
- 8.: Wagen
- 9.: Wagen
- 10.: Führungsprofil
- 11.: Führungsprofil
- 12.: Gewindespindel
- 13.: Ende
- 14.: Spindelmutter
- 15.: Pfeil
- 16.: Kreuzkopf
- 17.: Lagerbock
- 18.: Anschlag
- 19.: Lagerwange
- 20.: Kurbelarm
- 21.: Achse
- 22.: Pleuel
- 23.: Lagerwange
- 24.: Blaskopfarm
- 25.: Hohlwelle
- 26.: Rohrleitung
- 27.: Anschluss
- 28.: Abschnitt
- 29.: Abschnitt
- 30.: Träger
- 31.: Blaskopfdüse
- 32.: Feder
- 33.: Achse
- 34.: Schiene
- 35.: Klemmeinrichtung

## Patentansprüche

1. Baueinheit zum Überführen einer Komponente, nämlich eines Blaskopfes, eines Vorbodens oder eines Trichters einer I.S. Glasformmaschine zwischen einer ersten und einer zweiten Stellung entlang einer aus zwei Teilbewegungen zusammengesetzten Überführungskurve, wobei eine erste Teilbewegung aus einer Schwenkbewegung um eine sich horizontal erstreckende Achse (21) und wobei eine zweite Teilbewegung aus einer senkrecht gerichteten Linearbewegung besteht, **dadurch gekennzeichnet, dass** die Komponente an einem, um die Achse (21) drehbar gelagerten, zwischen einer sich im wesentlichen vertikal erstreckenden ersten Stellung und einer sich horizontal erstreckenden zweiten Stellung schwenkbaren Ausleger angeordnet ist, dass der Antrieb mit einer sich senkrecht erstreckenden Gewindespindel (12) in Verbindung steht, deren Drehbewegung nacheinander in die beiden Teilbewegungen umsetzbar ist, dass die Schwenkbewegung eine nach Maßgabe eines Winkelwertes begrenzte Drehbewegung um die Achse (21) und die Linearbewegung eine senkrecht zu der Achse (21) orientierte, sich an die Drehbewegung anschließende Bewegung ist, dass beide Teilbewegungen nacheinander mittels eines Antriebes einleitbar sind, dass ein Rahmengestell mit zueinander parallelen, sich senkrecht erstreckenden Führungen (5, 6) und zumindest zwei in diesen Führungen aufgenommene Wagen (7, 8) vorgesehen sind, wobei der obere Wagen (7) über eine in diesem gelagerte, mit der Gewindespindel (12) im Eingriff stehende Spindelmutter (14) in Achsrichtung der Spindelmutter antreibbar ist, wobei auf dem unteren Wagen (8) eine sich in Richtung der Achse (21) erstreckende Welle gelagert ist, welche den Kurbelzapfen eines Kurbelgetriebes bildet, dessen Pleuel (22) mit einem auf dem oberen Wagen (7) gelagerten Kreuzkopf (16) in Verbindung steht, über wenigstens einen, an dem Pleuel (22) angelenkten Kurbelarm (20) die Linearbewegung des Kreuzkopfes (16) entlang der Spindelwelle (12) in eine Schwenkbewegung des Kurbelzapfens umsetzend, und dass an dem einen der Wagen (7, 8) ein Anschlag (18) angeordnet ist, der die Verschiebebewegung des oberen Wagens (7) gegenüber dem unteren Wagen (8) mit der Maßgabe begrenzt, dass sich der Ausleger in der zweiten Stellung horizontal erstreckt.

2. Baueinheit nach Anspruch 1, **dadurch gekennzeichnet, dass** der untere Wagen (8) in Abwärtsrichtung entgegen der Kraft einer Feder (32) verschiebbar ist, wohingegen eine Verschiebbarkeit in Aufwärtsrichtung begrenzt angelegt ist.

3. Baueinheit nach Anspruch 2, **dadurch gekennzeichnet, dass** bei Berührung beider Wagen (7, 8) über den Anschlag (18) beide Wagen entgegen der Feder (32) als Gruppe entlang der Gewindespindel (12) verschiebbar sind, und zwar unter Beibehaltung der horizontalen Ausrichtung des Auslegers.

4. Baueinheit nach einem der Ansprüche 1 bis 3, **dadurch gekennzeichnet, dass** die Position des unteren Wagens (8) gegenüber einem Bezugsniveau einstellbar ausgebildet ist, und zwar unter Beibehaltung der horizontalen Ausrichtung des Auslegers bei Berührung der Wagen (7, 8) über den Anschlag (18).

5. Baueinheit nach Anspruch 4, **dadurch gekennzeichnet, dass** beide Wagen (7, 8) mittels einer Schiene (34) starr koppelbar sind, so dass mittels des Antriebs die Position des unteren Wagens (8) gegenüber dem Bezugsniveau einstellbar ist, und zwar unter Beibehaltung der horizontalen Ausrichtung des Auslegers bei Berührung der Wagen (7, 8) über den Anschlag (18).

6. Baueinheit nach einem der Ansprüche 1 bis 5, **gekennzeichnet durch** eine sich in Richtung der Achse (21) erstreckende Hohlwelle (25), an der der die Komponente tragende Ausleger angebracht ist.

7. Baueinheit nach Anspruch 6, **dadurch gekennzeichnet, dass** die Hohlwelle (25) mit einer in dem Rahmengestell angeordneten, in einem Anschluss (27) endenden Rohrleitung (26) in Verbindung steht, eine durchgängige Luftversorgungsleitung ausgehend von dem Anschluss (27) bis zu den Blaskopfdüsen (33) oder den Vorbodendüsen bildend.

8. Baueinheit nach Anspruch 7, **dadurch gekennzeichnet, dass** sich die Achsen (33) der Blaskopfdüsen (31), der Vorbodendüsen oder eines Trichters bei horizontaler Stellung des Auslegers senkrecht erstrecken.

9. Baueinheit nach Anspruch 7 oder 8, **dadurch gekennzeichnet, dass** die Rohrleitung (26) aus zwei relativ zueinander in Achsrichtung teleskopartig verschiebbaren Abschnitten (28, 29) besteht, deren einer mit dem Anschluss (27) und deren anderer mit der Hohlwelle (25) in Verbindung steht, die Verschiebbarkeit der Wagen (7, 8) überbrückend.

10. Baueinheit nach einem der Ansprüche 1 bis 9, **gekennzeichnet durch** einen dritten auf den Führungen (5, 6) aufgelagerten fest angeordneten Wagen (9), in dem die Feder (32) abgestützt ist.

## Geänderte Patentansprüche

### Geänderte Patentansprüche gemäss Regel 137(2) EPÜ.

**1.** Baueinheit zum Überführen einer Komponente einer I.S. Glasformmaschine zwischen einer ersten und einer zweiten Stellung entlang einer aus zwei Teilbewegungen zusammengesetzten Überführungskurve, wobei eine erste Teilbewegung aus einer Schwenkbewegung um eine sich horizontal erstreckende_Achse (21) und wobei eine zweite Teilbewegung aus einer senkrecht gerichteten Linearbewegung besteht, wobei die Komponente an einem, um die Achse (21) drehbar gelagerten, zwischen einer sich im wesentlichen vertikal erstreckenden ersten Stellung und einer sich horizontal erstreckenden zweiten Stellung schwenkbaren Ausleger angeordnet ist, wobei der Antrieb mit einer sich senkrecht erstreckenden Gewindespindel (12) in Verbindung steht, deren Drehbewegung nacheinander in die beiden Teilbewegungen umsetzbar ist, wobei die Schwenkbewegung eine nach Maßgabe eines Winkelwertes begrenzte Drehbewegung um die Achse (21) und die Linearbewegung eine senkrecht zu der Achse (21) orientierte, sich an die Drehbewegung anschließende Bewegung ist, wobei beide Teilbewegungen nacheinander mittels eines Antriebes einleitbar sind, wobei ein Rahmengestell mit zueinander parallelen, sich senkrecht erstreckenden Führungen (5, 6) und zumindest zwei in diesen Führungen aufgenommene Wagen (7, 8) vorgesehen sind, wobei der obere Wagen (7) über eine in diesem gelagerte, mit der Gewindespindel (12) im Eingriff stehende Spindelmutter (14) in Achsrichtung der Spindelmutter antreibbar ist, wobei auf dem unteren Wagen (8) eine sich in Richtung der Achse (21) erstreckende Welle gelagert ist, welche den Kurbelzapfen eines Kurbelgetriebes bildet, dessen Pleuel (22) mit einem auf dem oberen Wagen (7) gelagerten Kreuzkopf (16) in Verbindung steht, über wenigstens einen, an dem Pleuel (22) angelenkten Kurbelarm (20) die Linearbewegung des Kreuzkopfes (16) entlang der Spindelwelle (12) in eine Schwenkbewegung des Kurbelzapfens umsetzend, wobei an dem einen der Wagen (7, 8) ein Anschlag (18) angeordnet ist, der die Verschiebebewegung des oberen Wagens (7) gegenüber dem unteren Wagen (8) mit der Maßgabe begrenzt, dass sich der Ausleger in der zweiten Stellung horizontal erstreckt, wobei der untere Wagen (8) in Abwärtsrichtung entgegen der Kraft einer Feder (32) verschiebbar ist, und wobei eine Verschiebbarkeit in Aufwärtsrichtung begrenzt angelegt ist, so dass bei Berührung beider Wagen (7, 8) über den Anschlag (18) beide Wagen entgegen der Feder (32) als Gruppe entlang der Gewindespindel (12) verschiebbar sind, und zwar unter Beibehaltung der horizontalen Ausrichtung des Auslegers.

**2.** Baueinheit nach Anspruch 1, **dadurch gekennzeichnet, dass** die Position des unteren Wagens (8) gegenüber einem Bezugsniveau einstellbar ausgebildet ist, und zwar unter Beibehaltung der horizontalen Ausrichtung des Auslegers bei Berührung der Wagen (7, 8) über den Anschlag (18).

**3.** Baueinheit nach Anspruch 1 oder 2, **dadurch gekennzeichnet, dass** beide Wagen (7, 8) mittels einer Schiene (34) starr koppelbar sind, so dass mittels des Antriebs die Position des unteren Wagens (8) gegenüber dem Bezugsniveau einstellbar ist, und zwar unter Beibehaltung der horizontalen Ausrichtung des Auslegers bei Berührung der Wagen (7, 8) über den Anschlag (18).

**4.** Baueinheit nach einem der Ansprüche 1 bis 3, **gekennzeichnet durch** eine sich in Richtung der Achse (21) erstreckende Hohlwelle (25), an der der die Komponente tragende Ausleger angebracht ist.

**5.** Baueinheit nach Anspruch 4, **dadurch gekennzeichnet, dass** die Komponente ein Blaskopf, ein Vorboden oder ein Trichter einer Glasformmaschine ist, dass die Hohlwelle (25) mit einer in dem Rahmengestell angeordneten, in einem Anschluss (27) endenden Rohrleitung (26) in Verbindung steht, eine durchgängige Luftversorgungsleitung ausgehend von dem Anschluss (27) bis zu den Blaskopfdüsen (33) oder den Vorbodendüsen bildend.

**6.** Baueinheit nach Anspruch 5, **dadurch gekennzeichnet, dass** sich die Achsen (33) der Blaskopfdüsen (31), der Vorbodendüsen oder eines Trichters bei horizontaler Stellung des Auslegers senkrecht erstrecken.

**7.** Baueinheit nach Anspruch 5 oder 6, **dadurch gekennzeichnet, dass** die Rohrleitung (26) aus zwei relativ zueinander in Achsrichtung teleskopartig verschiebbaren Abschnitten (28, 29) besteht, deren einer mit dem Anschluss (27) und deren anderer mit der Hohlwelle (25) in Verbindung steht, die Verschiebbarkeit der Wagen (7, 8) überbrückend.

**8.** Baueinheit nach einem der Ansprüche 1 bis 7, **gekennzeichnet durch** einen dritten auf den Führungen (5, 6) aufgelagerten fest angeordneten Wagen (9), in dem die Feder (32) abgestützt ist.
